# EUROPÄISCHE PATENTSCHRIFT

(11) **EP 1 563 505 B1**
(45) Veröffentlichungstag und Bekanntmachung des Hinweises auf die Patenterteilung: **31.01.2007**
(21) Anmeldenummer: 03810987.2
(22) Anmeldetag: 14.11.2003
(51) Int. Cl.: G11B 23/50

(54) **VORRICHTUNG ZUM UNLESBARMACHEN VON OPTISCHEN SPEICHERMEDIEN**
DEVICE FOR RENDERING OPTICAL STORAGE MEDIA UNREADABLE
DISPOSITIF POUR RENDRE ILLISIBLES DES SUPPORTS D'ENREGISTREMENT OPTIQUES

(30) Priorität: 14.11.2002 DE 20217688 U
(43) Veröffentlichungstag der Anmeldung: 17.08.2005
(73) Patentinhaber: Lebe, Botho W., 83064 Raubling (DE); Nöhbauer, Peter, 83533 Edling (DE); Ehrnsberger, Adi, 80469 München (DE)
(72) Erfinder: Lebe, Botho W., 83064 Raubling (DE); Nöhbauer, Peter, 83533 Edling (DE); Ehrnsberger, Adi, 80469 München (DE)
(74) Vertreter: Gritschneder, Martin
(86) Internationale Anmeldenummer: PCT/EP2003/012734
(87) Internationale Veröffentlichungsnummer: WO 2004/044902

(56) Entgegenhaltungen:
- WO-A-01/56030
- WO-A-97/28924
- DE-A- 10 061 321
- DE-A- 10 103 322
- US-A- 5 862 114
- US-A- 5 956 311
- US-A- 6 039 637
- US-B1- 6 189 446
- PATENT ABSTRACTS OF JAPAN Bd. 2003, Nr. 02, 5. Februar 2003 (2003-02-05) -& JP 2002 312945 A (UNIT:KK; OMORI KOICHIRO), 25. Oktober 2002 (2002-10-25)

## Beschreibung

Die Erfindung betrifft eine Vorrichtung zum Unlesbarmachen von optischen Speichermedien, insbesondere CDs und DVDs.

Geräte zum Aufzeichnen von Information auf CDs sind allgemein verfügbar. Wegen der geringen Kosten von CD-Rohlingen werden CDs daher häufig zum Sichern von Informationen verwendet. Wenn die Informationen nicht mehr benötigt werden, so sollen sie gelöscht werden. Bei CDs bedeutet dies, dass diese unlesbar gemacht werden sollen. Dadurch soll ein Missbrauch der gespeicherten Daten verhindert werden.

Aus JP-A-2000222740 ist ein Verfahren zum Entsorgen von CDs bekannt, wobei die CD in eine Folie eingeschweißt wird.

Aus JP-A-01053352 ist es bekannt, zwei CDs mit den Leseseiten zueinander anzuordnen und zwischen die beiden CDs ein Lösungsmittel einzugeben, das die Schichten zerstört, die die Information tragen.

Aus DE 100 61 321 A und JP 2002 312 945 A sind Vorrichtungen zum Unlesbarmachen optischer Speichermedien wie CDs und DVDs mit Spitzen bekannt.

Der Erfindung liegt die Aufgabe zugrunde, eine einfache Vorrichtung zum Unlesbarmachen von optischen Speichermedien wie CDs und DVDs zu schaffen.

Erfindungsgemäß wird diese Aufgabe dadurch gelöst, dass die Vorrichtung einen Körper mit einem Einschnitt und mindestens ein Paar gegeneinander gerichteter in den Einschnitt ragenden Spitze aufweist.

Soll eine CD unlesbar gemacht werden, so wird sie in den Einschnitt geschoben. Die in den Einschnitt ragende Spitze(n) zerkratzt die beiden Oberflächen der CD dabei, so dass die auf der CD gespeicherte Information nicht mehr gelesen werden kann.

Vorzugsweise ragen in den Einschnitt mindestens sechs gegeneinander gerichtete Spitzen, so dass eine in den Einschnitt geschobene CD sowohl auf der Ober- als auch auf der Unterseite -jeweils dreimal- zerkratzt wird. Die Spitzen sind idealerweise so angeordnet, dass sie über den gesamten Radius die Oberfläche der CD zerkratzen können. Ein Rekonstruieren der auf der CD enthaltenen Daten ist dann auch mit großem Aufwand kaum noch möglich.

Bei dem Körper kann es sich beispielsweise um einen Stab mit 25 bis 35 mm Durchmesser und 150 mm Länge handeln, der an einem Ende einen Einschnitt mit einer Höhe von mindestens 1 mm hat, der sich über eine Länge von mindestens 50 mm erstreckt. Im Abstand von ca. 5 mm von diesem Stabende sind Gewindestifte senkrecht zur Ebene des Einschnitts eingedreht, und gegeneinander ausgerichtet. Die Gewindestifte sind am vorderen Ende zugespitzt und sind so weit eingedreht, dass beide Spitzen in den Einschnitt vorstehen und der Abstand der Spitzen kleiner ist als die Dicke einer CD, also höchstens 0,7 mm.

Der Stab kann aus Metall (beispielsweise Aluminium), Kunststoff oder Holz bestehen. Die Gewindestifte bestehen aus einem Material, das deutlich härter ist als das Kunststoffmaterial der CDs und DVDs. Vorzugsweise handelt es sich um Stahlstifte mit gehärteter Spitze. Die Gewindestifte können durch Verkleben oder Kontern oder Selbstsicherung, vor Ein- bzw. Ausdrehen - und damit einer Änderung des Abstandes, gesichert sein.

Bei einer anderen Ausgestaltung der Erfindung ist der Körper eine flache, rechteckförmige Platte mit Seitenlängen von 10 und 14 cm. An einer der langen Seite ist ein flacher, taschenförmiger Einschnitt vorgesehen, dessen Breite etwas größer ist als der Durchmesser einer CD und dessen Tiefe etwa dem Radius einer CD entspricht. In geringem Abstand von der Öffnung des Einschnittes sind mittig die gegeneinander gerichteten (idealerweise 6) Gewindestifte vorgesehen. Zum Unlesbarmachen wird eine CD dann ein- oder mehrmals in den taschenförmigen Einschnitt geschoben, wobei jedesmal dann auf beiden Seiten der CD ein oder mehrere Kratzer angebracht werden.

In einer weiteren, möglichen Ausgestaltung der Erfindung ist die Vorrichtung ähnlich einer Stimmgabel ausgebildet und hat demnach einen zylindrischen Handgriff, von dem sich nach vorne zwei oder mehr Zinken oder Finger erstrecken, die an ihrem vorderen Ende gegeneinander gerichtete Spitzen aufweisen. Die Zinken oder Finger bestehen zweckmäßig aus Federstahl, so dass die Spitzen mit der durch die Elastizität der Zinken oder Finger vorgegebenen Kraft in die Vorderseite und Rückseite einer CD gedrückt werden.

Ausführungsbeispiele der Erfindung werden nachfolgend anhand der Zeichnung erläutert. Es zeigen:
- Fig. 1: eine Vorrichtung zum Unlesbarmachen von CDs und DVDs von der Seite;
- Fig. 2: die Vorrichtung von Fig. 1 von oben oder unten;
- Fig. 3: die Vorrichtung von Fig. 1 in einer Ansicht von vorne;
- Fig. 4: ein anderes Ausführungsbeispiel der erfindungsgemäßen Vorrichtung von vorne;
- Fig. 5: ein Ausführungsbeispiel mit zwei nebeneinander angeordneten Paaren von Gewindestiften von oben oder unten;
- Fig. 6: die Vorrichtung von Fig. 5 von vorne;
- Fig. 7: ebenfalls die Vorrichtung von Fig. 5 von vorne, wobei der Stab jedoch einen quadratischen Querschnitt hat;
- Fig. 8, 9 und 10: ein Ausführungsbeispiel, wobei dem die Vorrichtung insgesamt die Form einer Platte hat;
- Fig. 11, 12 und 13: ein Ausführungsbeispiel, bei dem die Vorrichtung die Form einer Gabel hat, und
- Fig. 14: eine Halterung für die erfindungsgemäße Vorrichtung.

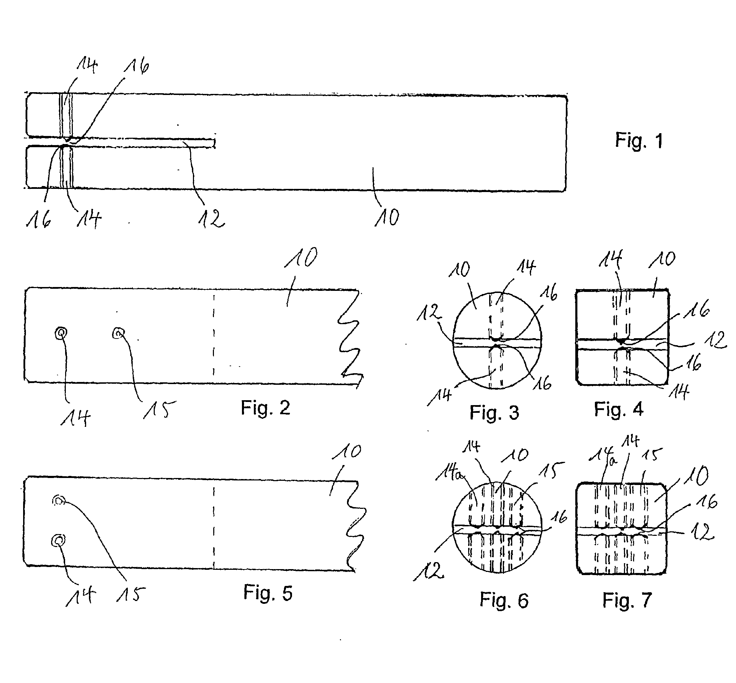

Das in der Zeichnung dargestellte Ausführungsbeispiel der erfindungsgemäßen Vorrichtung hat einen Körper in Form eines Stabes 10 von rundem Querschnitt. Die Länge des Stabes 10 beträgt 150 mm und der Durchmesser 25 - 35 mm. An dem in Fig. 1 linken Ende des Stabes befindet sich ein Einschnitt 12, der sich durch den gesamten Durchmesser des Stabes 10 erstreckt und eine Länge von 50 bis 52 mm hat. Normal zur Ebene des Einschnitts 12 sind zueinander koaxiale Gewindestifte 14, 14a und 15 in entsprechende Gewindebohrungen in den Stab 10 eingedreht und zwar in einem geringen Abstand vom vorderen, in Fig. 1 linken Ende des Stabes 10. Bei dem dargestellten Ausführungsbeispiel beträgt der Abstand etwa 5 mm.

Die Gewindestifte 14, 14a und 15 haben an dem in den Einschnitt 12 hineinragende Ende eine konische Spitze 16. Die Spitzen 16 der koaxialen Gewindestifte 14, 14a und 15 sind, wie in Fig. 1 erkennbar, gegeneinander gerichtet und ihr Abstand beträgt etwa 0,3 mm weniger als die Dicke einer CD, die mittels der Vorrichtung unlesbar gemacht werden soll. Die beiden Spitzen ragen dabei jeweils gleich weit in den Einschnitt 12 vor.

An ihrem äußeren Ende sind die Gewindestifte 14, 14a und 15 mit einem Innensechskant versehen.

Fig. 2 zeigt die Vorrichtung von Fig. 1 in Draufsicht. Es ist dabei ein zweites bzw. drittes Paar von Gewindestiften 15 eingezeichnet, die wahlweise vorhanden sein können.

Bei den Ausführungsbeispielen der Figuren 5 bis 7 sind drei Paare von Gewindestiften 14, 14a und 15 nebeneinander angeordnet. Der Querschnitt des Stabes 10 kann rund oder quadratisch oder ähnlich sein.

Die erfindungsgemäße Vorrichtung wird in der Weise benutzt, dass das optische Speichermedium, z.B. eine CD, in den Einschnitt 12 eingeschoben wird, bis der Rand der CD das Ende des Einschnitts 12 berührt. Durch die Spitzen 16 der Gewindestifte 14, 14a und 15 wird dabei sowohl die Ober- als auch die Unterseite der CD zerkratzt. Wenn auf diese Weise mindestens 6 Kratzer auf der CD hergestellt werden, so ist die CD mit üblichen CD-Laufwerken nicht mehr lesbar.

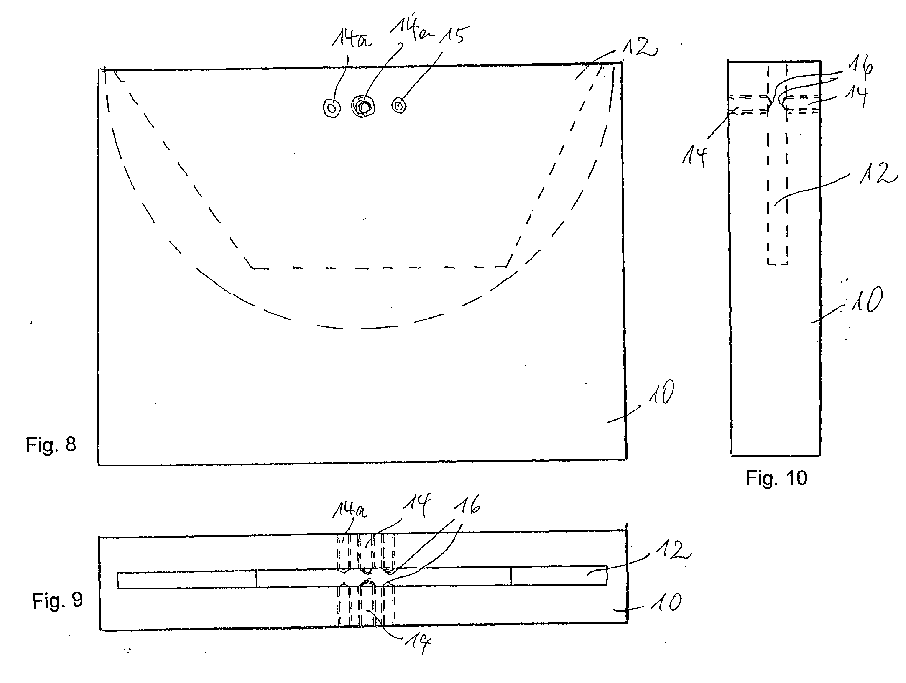

Die Figuren 8, 9 und 10 zeigen ein Ausführungsbeispiel, bei dem der Körper die Form einer rechteckförmigen Platte 10 mit Seitenlängen von ca. 110 und 150 mm und einer Stärke von ca. 20 mm hat. Ausgehend von einer der langen Seiten ist in der Mittelebene der Platte ein etwa 5 mm hoher Einschnitt 12 vorgesehen, der sich nahezu über die gesamte Länge der Seite erstreckt und eine Tiefe von etwa 55 mm hat, also etwas weniger als dem Radius einer CD. Der Einschnitt 12 hat einen trapezförmigen Grundriss, kann jedoch auch halbkreisförmig sein. Etwas zurückgesetzt von der Mitte der Öffnung des Einschnitts 12 sind auf der Ober- und Unterseite der Platte 10 Gewindestifte 14, 14a und 15 eingedreht, deren konische Spitze 16 in den Einschnitt 12 vorstehen und einen gegenseitigen Abstand von höchstens 0,7 mm haben.

Die Handhabung dieser Vorrichtung ist analog zu der der vorausgehenden Beispiele, d.h. eine CD wird zum Unlesbarmachen an verschiedenen Stellen ihres Umfangs ein- oder mehrmals in den Einschnitt 12 eingeschoben. Durch die dabei aufgebrachten Kratzer wird sie unlesbar.

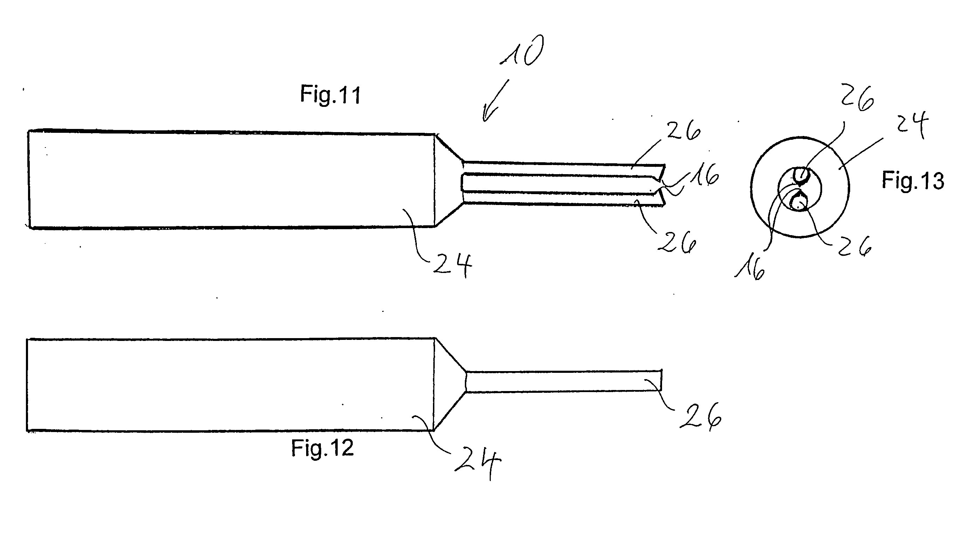

Die Figuren 11 bis 13 zeigen ein Ausführungsbeispiel, bei dem die Vorrichtung ähnlich einer Stimmgabel ausgebildet ist. Der Körper setzt sich dabei aus einem Handgriff 24 und mindestens zwei Zinken oder Fingern 26 zusammen, die von dem Handgriff 24 achs-parallel zu ihm und parallel zueinander abstehen. Die Zinken 26 haben einen ovalen oder runden Querschnitt, können jedoch auch einen rechteckförmigen Querschnitt haben. Ihre Länge beträgt mindestens 50 mm. Am vorderen Ende der Zinken 26 sind die Spitzen 16 angeformt. Die Zinken 26 erstrecken sich von einem Dorn weg und bestehen beispielsweise aus Federstahl.

Bei diesem Ausführungsbeispiel erfolgt die Benutzung analog zu dem der Figuren 1 bis 3.

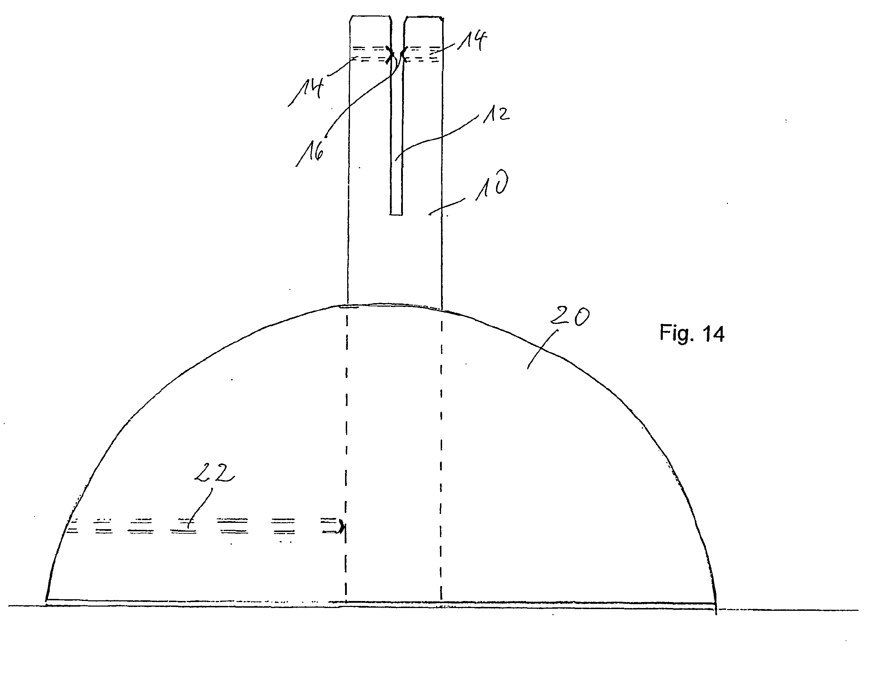

Fig. 14 zeigt ein Tischmodell der erfindungsgemäßen Vorrichtung. Der Stab 10 ist dabei in einen Fuß 20 eingesetzt und dort mittels eines Gewindestiftes 22 gesichert. Das Gewicht des Fußes ist so bemessen, dass die Gewichtskraft größer ist als die Kraft, die zum Herausziehen der CD aus dem Einschnitt 12 erforderlich ist, so dass das Tischmodell beim Herausziehen der CD nicht angehoben wird.

### Bezugszeichen

- 10: Körper (Stab, Platte)
- 12: Einschnitt
- 14: Gewindestift
- 14a: Gewindestift
- 15: Gewindestift
- 16: Spitze
- 20: Fuß
- 22: Gewindestift
- 24: Handgriff
- 26: Finger, Zinken

## Patentansprüche

1. Vorrichtung zum Unlesbarmachen optischer Speichermedien wie CDs und DVDs, **gekennzeichnet durch** einen Körper (10), der einen ebenen Einschnitt (12) aufweist, wobei in den Einschnitt (12) mindestens ein Paar gegeneinander gerichteter Spitzen (16) ragt.

2. Vorrichtung nach Anspruch 1, **dadurch gekennzeichnet, dass** in den Einschnitt (12) mindestens zwei Paare von Spitzen (16) ragen.

3. Vorrichtung nach Anspruch 1 oder 2, **dadurch gekennzeichnet, dass** der Körper ein Stab (10) mit einem Durchmesser von etwa 25 bis 35 mm und einer Länge von etwa 150 mm ist und dass der Einschnitt (12) eine Höhe größer 1 mm und eine Tiefe von etwa 50 mm hat und diametral in dem Stab (10) angeordnet ist.

4. Vorrichtung nach einem der Ansprüche 1 bis 3, **dadurch gekennzeichnet, dass** normal zur Ebene des Einschnitts (12) einer oder mehrere Gewindestifte (14,14a, 15) in den Körper bzw. Stab (10) eingeschraubt sind, an deren vorderem Ende die Spitzen (16) ausgebildet sind.

5. Vorrichtung nach Anspruch 1 oder 2 **dadurch gekennzeichnet, dass** der Körper eine Platte (10) ist und dass der Einschnitt (12) von einer der Seitenflächen der Platte (10) parallel zur Plattenebene ausgeführt ist und trapezförmig oder halbkreisförmig ist, so dass er das optische Speichermedium etwa zur Hälfte aufnehmen kann, und dass in geringem Abstand vom Öffnungsrand des Einschnitts (12) die in den Einschnitt ragenden Spitzen (16) vorgesehen sind.

6. Vorrichtung nach Anspruch 1 oder 2, **dadurch gekennzeichnet, dass** der Körper einen Handgriff (24) und davon achsparallel mit geringem gegenseitigen Abstand abstehende Zinken (26) aufweist, an deren vorderem Ende die Spitzen (16) vorgesehen sind.

## Claims

1. Device for making optical storage media such as CDs and DVDs unreadable, **characterized by** an element (10) which has a flat slot (12), at least one pair of oppositely directed tips (16) projecting into the slot (12).

2. Device according to claim 1, **characterized in that** at least two pairs of tips (16) project into the slot (12).

3. Device according to claim 1 or 2, **characterized in that** the element is a bar (10) approximately 25 to 35 mm in diameter and approximately 150 mm long and that the slot (12) is more than 1 mm high and approximately 50 mm deep and arranged diametrically in the bar (10).

4. Device according to any one of claims 1 to 3, **characterized in that** one or more headless threaded pins (14, 14a, 15) are screwed into the element or bar (10) perpendicular to the plane of the slot (12), at the front end of which the tips (16) are developed.

5. Device according to claim 1 or 2, **characterized in that** the element is a plate (10) and the slot (12) is parallel to the plate plane from one of the side surfaces of the plate (10) and is trapezoidal or semi-circular, so that it can house approximately half of the optical storage medium, and the tips (16) projecting into the slot are provided a short distance from the opening edge of the slot (12).

6. Device according to claim 1 or 2, **characterized in that** the element has a handle (24) and prongs (26), projecting axis-parallel from it and spaced a small mutual distance, at the front end of which the tips (16) are provided.

## Revendications

1. Dispositif pour rendre illisibles des supports d'enregistrement optiques, tels que des CD et des DVD, **caractérisé par** un corps (10) qui présente une entaille plane (12), au moins un couple de pointes (16) orientées l'une vers l'autre pénétrant dans l'entaille (12).

2. Dispositif selon la revendication 1, **caractérisé en ce qu'**au moins deux couples de pointes (16) pénètrent dans l'entaille (16).

3. Dispositif selon la revendication 1 ou la revendication 2, **caractérisé en ce que** le corps est une barre (10) d'un diamètre d'environ 25 à 35 mm et d'une longueur d'environ 150 mm et que l'entaille (12) a une hauteur supérieure à 1 mm et une profondeur d'environ 50 mm et est disposée diamétralement dans la barre (10).

4. Dispositif selon l'une quelconque des revendications 1 à 3, **caractérisé en ce qu'**une ou plusieurs tiges filetées (14, 14a, 15), à l'extrémité avant desquelles les pointes (16) sont formées, sont vissées dans le corps, respectivement la barre (10), perpendiculairement au plan de l'entaille (12)

5. Dispositif selon la revendication 1 ou la revendication 2, **caractérisé en ce que** le corps est une plaque (10) et que l'entaille (12) est réalisée par l'une des faces latérales de la plaque (10) parallèlement au plan de la plaque et est de forme trapézoïdale ou semi-circulaire, de telle sorte qu'il peut recevoir le support d'enregistrement optique à peu près à la moitié et **en ce que** les pointes (16) pénétrant dans l'entaille (12) sont prévues à distance réduite du bord d'ouverture de l'entaille.

6. Dispositif selon la revendication 1 ou la revendication 2, **caractérisé en ce que** le corps présente une poignée (24) et des dents (26) faisant saillie de celle-ci parallèlement à l'axe avec un écart mutuel réduit, à l'extrémité avant desquelles les pointes (16) sont prévues.
